Europäisches Patentamt

European Patent Office

Office européen des brevets

(11) Veröffentlichungsnummer : **0 021 239**
**B1**

(12)

# EUROPÄISCHE PATENTSCHRIFT

(45) Veröffentlichungstag der Patentschrift :
15.12.82

(51) Int. Cl.³ : **C 04 B 35/56**

(21) Anmeldenummer : **80103228.5**

(22) Anmeldetag : **11.06.80**

(54) **Verfahren zur Herstellung von dichten Formkörpern aus polykristallinem alpha-Siliciumcarbid durch Heisspressen und so hergestellte Formkörper.**

(30) Priorität : **12.06.79 DE 2923728**

(43) Veröffentlichungstag der Anmeldung :
**07.01.81 (Patentblatt 81/01)**

(45) Bekanntmachung des Hinweises auf die Patenterteilung : **15.12.82 Patentblatt 82/50**

(84) Benannte Vertragsstaaten :
**AT BE CH DE FR GB IT LI NL SE**

(56) Entgegenhaltungen :
EP A 0 004 031
DE A 2 813 665
FR A 2 355 789
GB A 952 554
GB A 2 017 070
GB A 2 031 027
US A 3 836 673
AD-report 779053 (SRD-74-040), April 1974
S. PROCHAZKA : « Investigation of ceramics for high-temperature turbine vanes »

(73) Patentinhaber : **Elektroschmelzwerk Kempten GmbH**
**Herzog-Wilhelm-Strasse 16**
**D-8000 München 2 (DE)**

(72) Erfinder : **Kriegesmann, Jochen, Dr.**
**Vorwaldstrasse 75**
**D-8961 Durach-Bechen (DE)**
Erfinder : **Lipp, Alfred, Dr.**
**Bürgermeister-Singer-Strasse 15**
**D-8939 Bad Wörishofen (DE)**
Erfinder : **Reinmuth, Klaus, Dr.**
**An der Halde 21**
**D-8961 Durach (DE)**

## Verfahren zur Herstellung von dichten Formkörpern aus polykristallinem alpha-Siliciumcarbid durch Heißpressen und so hergestellte Formkörper

Formkörper aus polykristallinem Siliciumcarbid sind bereits bekannt. Sie zeichnen sich durch eine Kombination wertvoller Eigenschaften aus, wie Oxidationsbeständigkeit und Temperaturwechselbeständigkeit, günstiges kriechverhalten, relativ niedrige Dichte, geringe thermische Ausdehnung sowie hohe Wärmeleitfähigkeit und große Härte. Aufgrund dieser Eigenschaften können sie daher beispielsweise als Werkstoffe für Verbrennungsrohre, wärmeaustauschvorrichtungen oder Raketendüsen eingesetzt werden. Wegen ihrer guten mechanischen Eigenschaften finden sie ferner auf dem Gebiet der Verschleißtechnik Verwendung und wegen der Störstellen-Leitfähigkeit des Siliciumcarbids in der Elektronik und Elektrotechnik.

Es ist jedoch ebenfalls bekannt, daß sich reines Siliciumcarbid, auch unter Anwendung von Druck, nicht bis zur theoretischen Dichte von 100 % verdichten läßt. Aus diesem Grunde sind bereits verschiedene Zusätze als Sinterhilfsmittel bekannt geworden, die in Abhängigkeit von dem jeweils angewendeten Verfahren zu mäßig dichten bis dichten Formkörpern führen. Hohe Dichte allein ist jedoch kein ausschlaggebendes Kriterium für eine hohe Warmfestigkeit des betreffenden Körpers, worunter zu verstehen ist, daß eine hohe mechanische Festigkeit, zu deren Charakterisierung die Biegebruchfestigkeit dient, auch bei hohen Temperaturen, das heißt, bis zu etwa 1 500 °C und höher, unverändert erhalten bleibt. Eine hohe Warmfestigkeit ist aber insbesondere für die Verwendung der Formkörper als Werkstoffe im Hochtemperatur-Maschinenbau, beispielsweise für Heißgasturbinen von entscheidender Bedeutung, die Arbeitstemperaturen in diesem Bereich ausgesetzt sind.

Das älteste der bekannten Verfahren zur herstellung von dichten Siliciumcarbidformkörpern beruht auf der sogenannten Reaktionssinterung, bei dem Siliciumcarbidpulver mit Kohlenstoff und/oder einem organischen Harzbindemittel unter Bildung von vorgeformten Körpern verarbeitet wird, die anschließend in Gegenwart einer Silicium enthaltenden Atmosphäre erhitzt werden. Der Kohlenstoff reagiert dabei mit dem Silicium unter Bildung von zusätzlichem SiC, wodurch eine Verbindung der bereits vorliegenden SiC-Körner erreicht wird. Vorhandene Löcher werden gleichzeitig mit überschüssigem Silicium ausgefüllt. Die so erhaltenen Sinterkörper weisen zwar eine sehr hohe Dichte auf, da sie praktisch porenfrei sind, aber sie enthalten freies Silicium. Ihrer Verwendung als Werkstoffe im Hochtemperaturmaschinenbau sind daher enge Grenzen gesetzt, da sie bei Temperaturen oberhalb von 1 400 °C zum Ausschwitzen von Silicium (Fp. 1 440 °C) neigen.

Dichte Siliciumcarbidformkörper können ferner nach dem sogenannten Heißpreß- oder Drucksinterverfahren unter Verwendung von Aluminium oder Bor enthaltenden Zusätzen als Sinterhilfsmittel hergestellt werden.

So werden beispielsweise in der US-A 3 836 673 (die der DE-B 23 14 384 entspricht) dichte, heißgepreßte Formkörper aus feinkörnigem $\alpha$-Siliciumcarbid beschrieben, die 0,5 bis 5 Gew.-% Aluminium enthalten, das bei der Röntgenbeugungsanalyse nicht als getrennte Phase erscheint. Für die Herstellung ist ein 15 bis 60 Stunden dauernder Mahlvorgang des Pulverförmigen Ausgangsgemisches vor dem Heißpressen notwendig, und es wird betont, daß die Festigkeit des fertig gepreßten Körpers in direkter Beziehung zur Mahlzeit steht. Diese Formkörper haben zwar bei Raumtemperatur eine Biegebruchfestigkeit von über 7 000 kp/cm² (= 687 N/mm²), die jedoch mit steigender Temperatur stark abfällt und bei 1 500 °C nur noch etwa 3 140 kp/cm² (= 308 N/mm²) beträgt. Derartige Formkörper sind daher nicht hochwarmfest, was auch durch einen im wesentlichen interkristallinen Bruchmodus bestätigt wird.

Aus der US-A 3 853 566 (die der DE-A 23 63 036 entspricht) sind hingegen heißgepreßte Formkörper aus feinkörnigem $\beta$-Siliciumcarbid bekannt, die mittels eines Bor enthaltenen Zusatzes oder Borcarbid hergestellt worden sind. Diese Formkörper haben bei Raumtemperatur eine Biegebruchfestigkeit von nur etwa 5 600 kp/cm² (= 549 N/mm²), die aber bis etwa 1 400 °C unverändert bleibt und erst ab 1 600 °C auf Werte unter 4 000 kp/cm² (= 392 N/mm²) absinkt, und der Bruchmodus ist sowohl bei Raumtemperatur als auch bei höheren Temperaturen transkristallin. (Eine Zusammenstellung über Biegebruchfestigkeit und Bruchmodus der oben genannten Sinterkörper wurde von J. W. Edington et al. in « Powder Metallurgy International », Vol. 7, No. 2, Seite 82 ff (1975) vorgenommen.)

Da aber offensichtlich beim Heißpressen von Siliciumcarbid mit Borzusatz ein übertriebenes Kornwachstum auftritt, das für die mäßigen mechanischen Festigkeitseigenschaften verantwortlich ist, wird in der US-A 4 108 929 (die der GB-A 1 473 911 entspricht) ein Verfahren zum Heißpressen von Siliciumcarbid mit Borzusatz und einem Kohlenstoff enthaltenden Zusatz beschrieben, wonach SiC-Körper, die jedoch von elementarem Kohlenstoff in Form kleiner Partikel durchsetzt sind, erhalten werden, mit verbesserten Hochtemperatureigenschaften. Wie aus den Beispielen ersichtlich, bei welchem $\beta$-SiC als Ausgangsmaterial verwendet wurde, liegen die besten Werte für die Biegefestigkeit (gemessen nach der 3-Punktmethode) bei Raumtemperatur bei 493,7 N/mm² (71 900 psi) und bei 1 500 °C bei 590,6 N/mm² (86 100 psi). Das Kornwachstum kann jedoch trotz des Kohlenstoffzusatzes nur durch Einhaltung ganz bestimmter Bedingungen hinsichtlich Druck (10 000 psi) und Temperatur (1 950 °C) in Grenzen gehalten werden, wobei insbesondere die Einhaltung eines derartig eng begrenzten Temperaturbereichs hohe Anforderungen an eine exakte Temperaturregelung stellt, die in diesem Bereich nur schwierig durchführbar ist. Die übertragung eines derartigen Verfahrens in den großtechnischen Bereich ist daher mit einem ungewöhnlich hohen Aufwand verbunden.

Eine bessere Kontrolle des Kornwachstums beim Heißpressen von SiC kann indessen durch Verwendung von Bornitrid als Sinterhilfsmittel erreicht werden, wie aus dem in der US-A 3 954 483 beschriebenen Verfahren hervorgeht. Die so hergestellten Körper aus β-SiC zeigen jedoch weniger gute mechanische Festigkeitseigenschaften, daß heißt, die Werte für die Biegefestigkeit bei Raumtemperatur liegen bei 476 N/mm² (69 000 psi) und bei 1 500 °C bei 531 N/mm² (77 000 psi). Darüber hinaus muß die Erzielung des einheitlichen Mikrogefüges durch eine geringere Dichte erkauft werden, die praktisch im Bereich von 98 % der theoretischen Dichte von SiC (im folgenden als %TD abgekürzt) liegt und nur durch die zusätzliche Mitverwendung von Bor in Form von elementarem Bor oder Borcarbid bis zur annähernd theoretischen Dichte gesteigert werden kann.

Die Verwendung von Siliciumnitrid anstelle von Bornitrid als Sinterhilfsmittel beim Heißpressen von SiC wird in den US-A 3 960 577 und US-A 3 968 194 beschrieben. Für den Einsatz des Siliciumnitridssind jedoch relativ große Mengen erforderlich (3,5 %-10 %), und darüber hinaus ist die Mitverwendung von Bor in Form von elementarem Bor oder Borcarbid unbedingt erforderlich. Wie aus den Beispielen ersichtlich ist, wird unter Einsatz von β-SiC, Zusatz von 1 % Bor und 5 % $Si_3N_4$, ein Formkörper erhalten, der bei Raumtemperatur eine Biegefestigkeit von über 600 N/mm² ($1,03 \times 10^5$ psi) zeigt. Über die Biegefestigkeit bei höheren Temperaturen werden jedoch keine Angaben gemacht. Siliciumnitrid (bis zu 5 %) soll durch Röntgenbeugungsanalyse nicht als getrennte Phase nachweisbar sein. Für die Herstellung dieser Körper sind wiederum sehr eng begrenzte Bedingungen hinsichtliche Druck (10 000 psi) und Temperatur (1 950 °C) erforderlich, was in diesem Fall wegen der bekannten Zersetzungsneigung von Siliciumnitrid ab etwa 1 800 °C zwingend geboten ist. Dennoch ist nicht auszuschließen, daß sich Siliciumnitrid unter den gegebenen Bedingungen unter Bildung einer metallischen Si-Phase zersetzt, die dann die Festigkeitseigenschaften des Sinterkörpers bei 1 500 °C beeinträchtigt.

Diese Nachteile werden auch durch die US-A 4 023 975 bestätigt, in der ein Verfahren zum Heißpressen von SiC unter Verwendung von Berylliumcarbid als Sinterhilfsmittel beschrieben wird, das vor allem die Vorteile haben soll, daß das Heißpressen in einem breiteren Temperaturbereich durchgeführt werden kann und die so erhaltenen Sinterkörper frei von glasartigen und metallischen Si-Phasen sind, durch welche die mechanischen Festigkeitseigenschaften bei erhöhter Temperatur störend beeinflußt werden. Die nach diesem Verfahren hergestellten Sinterkörper weisen jedoch Gefügekorngrößen bis zu 50 μm auf, und außerdem ist Berylliumcarbid als getrennte Phase nachweisbar. Über die mechanischen Festigkeitswerte werden keine Zahlenangaben gemacht. Die 2-Phasigkeit der Körper und das relativ grobkörnige Mikrogefüge lassen jedoch keine hohen Werte für die mechanische Festigkeit erwarten.

Mit Hilfe des Heißpreß- oder Drucksinterverfahrens ist es somit möglich, polykristalline SiC-Formkörper mit geringer Porosität herzustellen, wobei sich zur Erzielung einer hohen Dichte (mindestens 99 %TD) und eines feinkörnigen Mikrogefüges (durchschnittliche Korngröße im Bereich von etwa 5 μm), das praktisch einphasig ist, in Verbindung mit einem breiten Temperaturbereich beim Heißpreßvorgang, was aus verfahrenstechnischen Gründen vorteilhaft ist, der Zusatz von Aluminium als Sinterhilfsmittel bisher am besten bewährt hat.

Leider zeigen jedoch derartige Aluminium enthaltende SiC-Sinterkörper eine mit steigender Temperatur stark abfallende mechanische Festigkeit, was vermutlich darauf zurückzuführen ist, daß durch den Aluminiumzusatz an den Korngrenzen eine glasartige Alumosilicatschicht gebildet worden ist, die unter Belastung bei erhöhter Temperatur einen Korngrenzengleitvorgang auslöst, der zu einer unterkritischen Rißausbreitung führt. Diese Annahme wird durch die Tatsache bestätigt, daß derartige SiC-Körper einen interkristallinen Bruchmodus zeigen, da eine unterkritische Rißausbreitung nach dem korngrenzengleitmodell nur bei interkristallinem Bruch möglich ist.

Bei einem transkristallinen Bruchmodus nimmt hingegen in der Regel die Festigkeit bei Erhöhung der Temperatur nicht ab, daß heißt, in diesem Fall ist die unterkristische Rißausbreitung auch bei hohen Temperaturen nur von geringem Einfluß.

Als Maß für die unterkritische Rißausbreitung dient der sog. n-Exponent, der aus den experimentell ermittelten Daten für die Biegefestigkeit unter verschiedenen Belastungsgeschwindigkeiten errechnet werden kann, nach folgender Gleichung,

$$\sigma_B = c \cdot \dot{\sigma}^{1/n+1}$$

worin $\sigma_B$ die Biegebruchfestigkeit, $\dot{\sigma}$ die Belastungsgeschwindigkeit und c eine werkstoffabhängige Konstante bedeuten, wie von A. G. Evans-F. F. Lange im « Journal of Materials Science », Bd. 10 (1975), S. 1659-1664 beschrieben. Hieraus folgt, daß der n-Exponent um so höher ist, je geringer die unterkritische Rißausbreitung ist. Bei einem handelsüblichen Formkörper aus alpha-Siliciumcarbid mit interkristallinem Bruchmodus, der unter Verwendung von Aluminium als Sinterhilfsmittel durch Heißpressen hergestellt worden ist, haben die Autoren bei 1 400 °C einen n-Exponenten von 21 ermittelt.

Es stellt sich somit die Aufgabe, ein Verfahren zur Verfügung zu stellen, das auf einfache Weise durch Heißpressen in einem breiten Temperaturbereich durchgeführt werden kann und das die Herstellung von Formkörpern aus polykristallinem Siliciumcarbid mit verbesserten Eigenschaften, insbesondere verbesserter Oxidationsbeständigkeit und mechanischen Eigenschaften, die auch bei hohen Temperaturen unverändert bleiben, ermöglicht.

Das Verfahren zur Herstellung der Formkörper aus polykristallinem alpha-Siliciumcarbid mit einer Dichte von mindestens 99 % der theoretischen Dichte des SiC auf Grundlage von homogenem Vermischen von im wesentlichen in der alpha-Modifikation vorliegendem Siliciumcarbid in Pulverform mit einer Teilchengrößenverteilung von 3 μm und feiner, mit einem Aluminium enthaltenden Zusatz als Sinterhilfsmittel und anschließendem Heißpressen unter gleichzeitiger Formgebung in Gegenwart einer gegenüber Siliciumcarbid inerten Atmosphäre oder im Vakuum unter Anwendung eines Stempeldruckes von mindestens 100 bar (10 MPa) bei einer Temperatur von 1 850 °C bis 2 300 °C, ist dadurch gekennzeichnet, daß das Siliciumcarbidpulver mit dem Aluminium enthaltenden Zusatz in einer 0,1 bis 0,4 Gew.-% freiem Aluminium entsprechenden Menge, bezogen auf das Gesamtgewicht der Feststoffanteile, vermischt und heißgepreßt wird.

Die erfindungsgemäß hergestellten Formkörper bestehen aus

mindestens 98,8 Gew.-% alpha-Siliciumcarbid
0,1 bis 0,4 Gew.-% Aluminium
bis zu 0,4 Gew.-% Stickstoff und/oder Phosphor
bis zu 0,2 Gew.-% Sauerstoff und
bis zu 0,2 Gew.-% Kohlenstoff,

wobei das alpha-Siliciumcarbid in Form eines homogenen Mikrogefüges mit Korngrößen von max. 12 μm und die restlichen Bestandteile im wesentlichen in Form einer festen Lösung im alpha-SiC-Gitter vorliegen. Sie haben eine Biegebruchfestigkeit von mindestens 600 N/mm² bis zu mindestens 1 450 °C, gemessen nach der 4-Punktmethode bei einer Belastungsgeschwindigkeit von mindestens $3 \text{ N} \cdot \text{mm}^{-2} \cdot \text{sec}^{-1}$ und einen überwiegend transkristallinen Bruchmodus.

In den erfindungsgemäß hergestellten Formkörpern aus polykristallinem SiC liegen Aluminium sowie gegebenenfalls vorhandener Stickstoff und/oder Phosphor, Restsauerstoff und Restkohlenstoff definitionsgemäß im wesentlichen in Form einer festen Lösung im alpha-SiC-Gitter vor, worunter zu verstehen ist, daß sie bis zu einer 2 400-fachen Vergrößerung nicht als getrennte Phase nachweisbar sind.

Vorzugsweise haben die Formkörper einen Restsauerstoffgehalt und einen Restkohlenstoffgehalt von jeweils weniger als 0,1 Gew.-%, die ausschließlich aus dem für die Herstellung verwendeten alpha-SiC-Pulver stammen. Die Mitverwendung von zusätzlichem Kohlenstoff bei der erfindungsgemäßen Herstellung der Formkörper ist nicht nur nicht erforderlich, sondern unerwünscht, da hierdurch bereits die Oxidationsbeständigkeit der Sinterkörper nachteilig beeinflußt werden kann.

Der Bruchmodus der Formkörper ist bis zu Temperaturen von 1 450 °C und höher transkristallin. Damit ist sichergestellt, daß die Korngrenzen für das Festigkeitsverhalten keine Schwachstellen darstellen, das heißt, unter Belastung bei erhöhter Temperatur werden Korngrenzengleitvorgänge unterdrückt, und die hierdurch begünstigte unterkritische Rißausbreitung ist vernachlässigbar gering. Die Zahlenwerte für den n-Exponenten, der, wie bereits erwähnt, als Maß für die unterkritische Rißausbreitung dient, liegen bei 1 450 °C dementsprechend hoch, das heißt, in der Größenordnung von mindestens 70 und vorzugsweise von etwa 90.

Die erfindungsgemäß hergestellten Formkörper aus polykristallinem Siliciumcarbid weisen daher eine hohe Festigkeit bei zyklischer Belastung und unter Langzeitbedingungen auf, außerdem zeigen sie eine hohe Kriechfestigkeit.

Für die Durchführung des erfindungsgemäßen Verfahrens wird als Ausgangsmaterial vorteilhaft ein Siliciumcarbid-Mikronpulver (Teilchengrößenverteilung feiner 2,0 μm) verwendet, das durch Mahlen der kompakten Körper aus der großtechnischen SiC-Produktion (Acheson-Verfahren) und anschließende Klassierung (Windsichten, Schlämmen) in der erforderlichen Teilchenfeinheit erhalten werden kann. Als Maß für die Teilchenfeinheit des Pulvers wird zweckmäßig die spezifische Oberfläche herangezogen (gemessen nach der BET-Methode), da die Teilchengröße selbst erfahrungsgemäß im Mikronbereich nicht mehr mit hinreichender Genauigkeit bestimmt werden kann. Aus der Angabe der spezifischen Oberfläche kann die mittlere Teilchengröße gemäß der Gleichung

$$\overline{D} = \frac{6}{S \cdot \rho}$$

$\overline{D}$ = mittlere Teilchengröße in μm
S = spezifische Oberfläche in m²/g
$\rho$ = Pulverdichte in g/cm³
annäherungsweise berechnet werden.

SiC-Pulver mit einer spezifischen Oberfläche von 4 bis 20 m²/g, insbesondere im Bereich 4-14 m²/g, haben sich hierbei besonders bewährt. Aufgrund der hohen Herstellungstemperatur weist das im Acheson-Prozeß anfallende Siliciumcarbid im allgemeinen einen überwiegenden Prozentsatz der thermodynamisch stabileren α-Modifikation auf. Insbesondere kann durch Sortierung von kompakter Stückware aus den inneren Zonen der im Widerstandsofen nach Acheson gebildeten Siliciumcarbidwalze ein einphasiges α-SiC gewonnen werden. Ausgehend von solchen einphasigen α-SiC-Submikronpulvern werden die besten Ergebnisse erzielt, wobei eine Vorbehandlung mit Fluß- und/oder Salpetersäure zweckmäßig ist, um Fremdstoffe, insbesondere anhaftende Kieselsäure und andere Sauerstoff enthaltende Verbindungen, zu entfernen, die zu einer unerwünschten Erhöhung des Restsauerstoffgehaltes im fertigen Sinterkörper führen können. Das SiC-Pulver sollte eine Reinheit von mindestens 98 %, vorzugsweise 99 %, aufweisen.

Der Aluminium enthaltende Zusatz in den angegebenen Mengen ist für die Durchführung des erfindungsgemäßen Verfahrens von entscheidender Bedeutung, da durch eigene Versuche nachgewiesen wurde, daß mit höheren Gehalten an Aluminium die Hochtemperaturfestigkeit abfällt.

Der Aluminium enthaltende Zusatz wird vorteilhaft in Pulverform mit einer Teilchengrößenverteilung von 10 µm und feiner (Mikronpulver) eingesetzt, und zwar entweder als Aluminiummetall oder als Aluminiumverbindung. Es kann jedoch auch ein mit Aluminium dotiertes Siliciumcarbidpulver verwendet werden. Als Aluminiumverbindungen haben sich Aluminiumcarbid, Aluminiumnitrid und insbesondere Aluminiumphosphid bewährt. Die Verwendung oxydischer Aluminiumverbindungen, wie Aluminiumoxyd ist indessen nicht vorteilhaft, da diese zu unerwünscht hohen Restsauerstoffgehalten im fertigen Sinterkörper führen können.

Der Aluminium enthaltende Zusatz wird definitionsgemäß in einer 0,1 bis 0,4 Gew.-% freiem Aluminium entsprechenden Menge, bezogen auf das Gesamtgewicht der Feststoffanteile, verwendet. Geringere Mengen als 0,1 Gew.-% Aluminium sind praktisch nicht mehr im gewünschten Sinne wirksam, daß heißt, hiermit konnte unter den gegebenen Bedingungen keine ausreichende Verdichtung des Siliciumcarbids mehr erzielt werden. Größere Mengen als 0,4 Gew.-% Aluminium bringen keinen Vorteil. So konnte nachgewiesen werden, daß mit einem Aluminiumgehalt von 0,45 Gew.-% Formkörper erhalten werden, die zwar bei Raumtemperatur noch einen transkristallinen Bruchmodus zeigen, aber bei Temperaturen oberhalb von 1 400 °C bereits interkristallin brechen, was bereits mit einem nachweisbaren Festigkeitsabfall verbunden war. Bei einer weiteren Steigerung des Aluminiumgehalts auf 1,5 Gew.-% zeigten die Formkörper sowohl bei Raumtemperatur bis zu 1 450 °C einen interkristallinen Bruch mit einem noch deutlicheren Festigkeitsabfall bei 1 450 °C, das heißt, unter mechanischer Belastung trat in diesem Temperaturbereich bereits eine hohe unterkritische Rißausbreitung auf.

Der Einsatz von stickstoff- und phosphorfreien, Aluminium enthaltenden Zusätzen führt zu Sinterkörpern, die bei Raumtemperatur eine sehr niedrige elektrische Leitfähigkeit aufweisen und praktisch nur mit Aluminium dotiertes α-Siliciumcarbid enthalten. Bei Einsatz von Stickstoff oder Phosphor enthaltenden Aluminiumverbindungen und/oder von mit Stickstoff oder phosphor dotiertem Siliciumcarbidpulver können hingegen Sinterkörper mit hoher elektrischer leitfähigkeit bei Raumtemperatur erhalten werden, wobei Aluminium und Stickstoff bzw. Phosphor im wesentlichen in Form einer festen Lösung im Siliciumcarbidgitter vorliegen, was beispielsweise für eine nachträgliche elektroerosive Bearbeitung der Sinterkörper von Vorteil ist.

Die Durchführung des erfindungsgemäßen Verfahrens kann wie folgt erläutert werden :

Zunächst wird das SiC-Pulver mit dem Aluminium enthaltenden Zusatz homogen vermischt, was vorteilhaft dadurch erreicht wird, daß das Siliciumcarbidpulver gemeinsam mit dem pulverförmigen, Aluminium enthaltenden Zusatz in einem organischen Lösungsmittel dispergiert wird. Als organische Lösungsmittel können beispielsweise Aceton und niedere aliphatische alkohole mit 1 bis 6 C-Atomen Verwendung finden. Das Dispergieren kann durch mechanische Bewegung einer dünnflüssigen Suspension in Plastikbehältern unter Verwendung eines Rührers oder durch Kneten einer dickflüssigen Suspension in einer Knetvorrichtung vorgenommen werden, wobei Mahlzeiten bis zu etwa 2 h ausreichend sind. Durch Verlängerung der Mahlzeit für die Ausgangspulvermischung konnte keine weitere Festigkeitssteigerung des fertig gepreßten Sinterkörpers nachgewiesen werden. Nach dem Entfernen des Lösungsmittels, was beispielsweise bei einer dünnflüssigen Suspension durch Sprüch- oder Gefriertrocknung oder bei einer dickflüssigen Suspension durch Abdunsten während des Knetvorganges erfolgen kann, wird das erhaltene homogene Pulver unter gleichzeitiger Formgebung heißgepreßt.

Die Drucksinterung in dem angegebenen breiten Temperaturbereich wird vorzugsweise in einer widerstands- oder induktionsbeheizten Graphitpreßvorrichtung durchgeführt. Der angewendete Stempeldruck kann im Bereich von 100 bar (10 MPa) bis etwa 800 bar (90 MPa) liegen. Das für die Drucksinterung erforderliche Temperaturprogramm (Aufheizen-Verweilen-Abkühlen) kann in Abhängigkeit von dem gewählten Stempeldruck und der Temperatur variiert werden, wobei im allgemeinen Aufheizzeiten von etwa 20-30 Minuten und Verweilzeiten bei der gewählten Maximaltemperatur (Solltemperatur) von etwa 10-60 Minuten ausreichend sind. Die zu verdichtende Pulvermischung kann in der Heißpreßvorrichtung von einer inerten Atmosphäre oder Vakuum umgeben sein. In Gegenwart einer inerten Atmosphäre, worunter eine gegenüber SiC inerte Schutzgasatmosphäre zu verstehen ist, ist der umgebende Gasdruck üblicherweise der Normaldruck (1,01 bar = 0,101 MPa). Als Schutzgasatmosphäre können Edelgase, wie Argon oder Helium oder eine reduzierende Atmosphäre, was bevorzugt ist, wie CO oder $H_2$ Verwendung finden. Die Drucksinterung kann jedoch auch im Vakuum bei einem Gasdruck von < 50 mbar (< 5 000 Pa) durchgeführt werden, wobei sich ein Gasdruck von ≤ 30 mbar (≤ 3 000 Pa) besonders bewährt hat.

Das erfindungsgemäße Verfahren wird an Hand der folgenden Beispiele näher erläutert.

Beispiel 1

Als Ausgangsmaterial wurde ein α-SiC-Pulver mit einer spezifischen Oberfläche von 7,6 m²/g und

5

einem Reinheitsgrad von 99,1 Gew.-% sowie ein Aluminiummetallpulver mit einer spezifischen Oberfläche von 4,8 m²/g verwendet.

333 g des α-SiC-Pulvers wurden zusammen mit 1 g des Aluminiumpulvers (entsprechend einem Aluminiumzusatz von 0,3 Gew.-% freiem Aluminium, bezogen auf das Gesamtgewicht der Feststoffanteile) und 220 g Aceton in einer Knetvorrichtung 2 Stunden vermischt. Das nach Beendigung des Knetens erhaltene Pulver wurde anschließend in einem Vakuumtrockenofen 12 Stunden bei 50 °C getrocknet. Dann wurde die Pulvermischung in einer Graphitform unter Vakuum bei einem Gasdruck von 30 mbar (3 000 Pa) unter Anwendung eines Stempeldrucks von 400 bar (40 MPa) bei 2 150 °C heißgepreßt. Die Aufheizzeit betrug 25 Minuten und die Verweilzeit bei der Solltemperatur 60 Minuten. Nach dem Abschalten des Ofens wurde der Sinterkörper in der Form auf Raumtemperatur abgekühlt. Nach der Entformung wurde ein zylindrischer Körper mit einem Durchmesser von 72 mm und einer Höhe von 25 mm erhalten, mit einer Dichte von 3,201 g/cm³, entsprechend 99,7 % TD.

Hieraus wurden mittels Diamantwerkzeugen Probekörper mit den Endabmessungen 3,15 × 4,1 × 35 mm geschnitten und die Biegebruchfestigkeit bei der Prüftemperatur von 1 450 °C bestimmt. Die Biegebruchfestigkeit wurde nach der 4-Punktmethode mit einer Auflagenweite von 30 mm und einer Stützweite von 15 mm bei 3 verschiedenen Belastungsgeschwindigkeiten gemessen. Die Ergebnisse (Mittelwerte aus jeweils 16 Einzelmessungen) sind in der folgenden Tabelle zusammengestellt.

TABELLE 1

| Belastungsgeschwindigkeit (N/mm² · sec) | Biegebruchfestigkeit (N/mm²) |
|---|---|
| 0,3 | 646 |
| 3,0 | 662 |
| 30,0 | 679 |

Aus diesen Daten wurde nach der in der Beschreibung angegebenen Formel ein n-Exponent von etwa 90 ermittelt.

Die mit verdünnter Flußsäure behandelten Bruchflächen der Proben wurden keramographisch im Rasterektronmikroskop untersucht. Sie zeigten alle einen überwiegend transkristallinen Bruch. Die polierten Anschliffe der Proben wurden zum Sichtbarmachen der Korngrenzen mit einer siedenden alkalischen Ferricyanidlösung geätzt. Sie zeigten eine durchschnittliche Gefügekorngröße von 3 μm und eine maximale von 7 μm.

Beispiel 2

Aus 334 g eines α-SiC-Pulvers mit einer spezifischen Oberfläche von 9,1 m²/g und einem Reinheitsgrad von 98,8 Gew.-% und 0,67 g des in Beispiel 1 verwendeten Aluminiummetallpulvers (entsprechend einem Aluminiumzusatz von 0,2 Gew.-% freiem Aluminium, bezogen auf das Gesamtgewicht der Feststoffanteile) wurde, unter den gleichen Bedingungen wie in Beispiel 1 beschrieben, eine Pulvermischung hergestellt und heißgepreßt. Der Sinterkörper hatte eine Dichte von 3,205 g/cm³, entsprechend 99,8 % TD.

In Tabelle 2 sind die Biegefestigkeiten (auf die gleiche Weise wie in Beispiel 1 ermittelt) bei einer Belastungsgeschwindigkeit von 3 N/mm² · sec in Abhängigkeit von der Prüftemperatur zusammengestellt (Mittelwerte aus jeweils 8 Einzelmessungen).

TABELLE 2

| Temperatur (°C) | Biegefestigkeit (N/mm²) |
|---|---|
| 20 | 638 |
| 700 | 636 |
| 1 000 | 648 |
| 1 200 | 654 |
| 1 370 | 661 |
| 1 450 | 663 |

Die keramographische Untersuchung der Probekörper zeigte praktisch das gleiche Ergebnis wie in Beispiel 1.

## Beispiel 3

Aus 84,5 g des α-SiC-Pulvers aus Beispiel 1 und 0,73 g Aluminiumphosphid (entsprechend einem Aluminiumzusatz von 0,4 Gew.-% freiem Aluminium, bezogen auf das Gesamtgewicht der Feststoffanteile) wurde unter den gleichen Bedingungen wie in Beispiel 1 eine Pulvermischung hergestellt und heißgepreßt.

Der erhaltene Sinterkörper hatte eine Dichte von 3,205 g/cm³, entsprechend 99,8 % TD. In Tabelle 3 sind die Biegebruchfestigkeiten (auf die gleiche Weise wie in Beispiel 1 ermittelt) bei einer Belastungsgeschwindigkeit von 3 N/mm² · sec in Abhängigkeit von der Prüftemperatur zusammengestellt (Mittelwerte aus jeweils 6 Einzelmessungen).

TABELLE 3

| Temperatur (°C) | Biegefestigkeit (N/mm²) |
|---|---|
| 20 | 671 |
| 1 450 | 673 |

Durch keramographische Untersuchung wurde eine durchschnittliche Gefügekorngröße von 2 μm und eine maximale von etwa 4 μm festgestellt. Das Bruchverhalten war sowohl bei 20 °C als auch bei 1 450 °C transkristallin.

Die folgenden Beispiele 4 und 5 dienen zum Vergleich. Hierin wird gezeigt, daß ein höherer Aluminiumzusatz das Festigkeitsverhalten der Sinterkörper bei högeren Temperaturen verschlechtert.

## Beispiel 4 (zum Vergleich)

Aus 85 g des α-SiC-Pulvers aus Beispiel 1 und 0,385 g des Aluminiumpulvers aus Beispiel 1 (entsprechend einem Aluminiumzusatz von 0,45 Gew.-% freiem Aluminium, bezogen auf das Gesamtgewicht der Feststoffanteile) wurde unter den gleichen Bedingungen wie in Beispiel 1 eine Pulvermischung hergestellt und heißgepreßt.

Der erhaltene Sinterkörper hatte eine Dichte von 3,205 g/cm³, entsprechend 99,8 % TD.

In Tabelle 4 sind die Biegebruchfestigkeiten (auf die gleiche Weise wie in Beispiel 1 ermittelt) bei einer Belastungsgeschwindigkeit von 3 N/mm² · sec in Abhängigkeit von der Prüftemperatur zusammengestellt (Mittelwerte aus jeweils 6 Einzelmessungen).

TABELLE 4

| Temperatur (°C) | Biegefestigkeit (N/mm²) |
|---|---|
| 20 | 663 |
| 1 450 | 593 |

Wie hieraus ersichtlich, ist bei 1 450 °C bereits ein deutlich erkennbarer Abfall der Biegebruchfestigkeit festzustellen. Die Bruchfläche zeigte bei den bei Raumtemperatur gebrochenen Proben einen fast vollständig transkristallinen Bruch, jedoch bei 1 450 °C einen weitgehend interkristallinen Bruch.

## Beispiel 5 (zum Vergleich)

Aus 84 g des α-SiC-Pulvers aus Beispiel 1 und 1,28 g des Aluminiumpulvers aus Beispiel 1 (entsprechend einem Aluminiumzusatz von 1,5 Gew.-% freiem Aluminium, bezogen auf das Gesamtgewicht der Feststoffanteile) wurde, unter den gleichen Bedingungen wie in Beispiel 1 beschrieben, eine Pulvermischung hergestellt. Das Heißpressen erfolgte ebenfalls unter gleichen Bedingungen, mit der Äbanderung, daß die Aufheizzeit 20 Minuten und die Verweilzeit bei der Solltemperatur von 2 020 °C 20 Minuten betrug.

Der erhaltene Sinterkörper hatte eine Dichte von 3,208 g/cm³, entsprechend 99,9 % TD.

In Tabelle 5 sind die Biegefestigkeiten (auf die gleiche Weise wie in Beispiel 1 ermittelt) bei einer Belastungsgeschwindigkeit von 3 N/mm² · sec in Abhängigkeit von der Prüftemperatur zusammengestellt (Mittelwerte aus jeweils 6 Einzelmessungen).

# 0 021 239

TABELLE 5

| Temperatur (°C) | Biegefestigkeit (N/mm²) |
|---|---|
| 20 | 732 |
| 1 450 | 383 |

Hieraus geht eindeutig hervor, daß bei 1 450 °C ein außergewöhnlich starker Abfall der Biegebruchfestigkeit erfolgt. Die Bruchflächen der Proben zeigen sowohl bei Raumtemperatur als auch bei 1 450 °C einen überwiegend interkristallinen Bruch.

**Ansprüche** (für die Vertragsstaaten : BE, CH, DE, FR, GB, IT, LI, NL, SE)

1. Verfahren zur Herstellung von Formkörpern aus polykristallinem alpha-Siliciumcarbid mit einer Dichte von mindestens 99 % der theoretischen Dichte des Siliciumcarbids auf Grundlage von homogenem Vermischen von im wesentlichen in der alpha-Modifikation vorliegendem Siliciumcarbid in Pulverform mit einer Teilchengrößenverteilung von 3 μm und feiner, mit einem Aluminium enthaltenden Zusatz als Sinterhilfsmittel und anschließendem Heißpressen unter gleichzeitiger Formgebung in Gegenwart einer gegenüber Siliciumcarbid inerten Atmosphäre oder im Vakuum unter Anwendung eines Stempeldruckes von mindestens 100 bar (10 MPa) bei einer Temperatur von 1 850 °C bis 2 300 °C, dadurch gekennzeichnet, daß das Siliciumcarbildpulver mit dem Aluminium enthaltenden Zusatz in einer 0,1 bis 0,4 Gew.-% freiem Aluminium entsprechenden Menge, bezogen auf das Gesamtgewicht der Feststoffanteile, vermischt und heißgepreßt wird unter Bildung der Formkörper bestehend aus

mindestens 98,8 Gew.-% alpha-Siliciumcarbid,
0,1 bis     0,4 Gew.-% Aluminium,
           0,4 Gew.-% Stickstoff und/oder Phosphor
bis zu     0,2 Gew.-% Sauerstoff und
bis zu     0,2 Gew.-% Kohlenstoff,

wobei das alpha-Siliciumcarbid in Form eines homogenen Mikrogefüges mit Korngrößen von maximal 12 μm und die restlichen Bestandteile im wesentlichen in Form einer festen Lösung im alpha-SiC-Gitter vorliegen, mit einer Biegebruchfestigkeit von mindestens 600 N/mm² bis zu mindestens 1 450 °C, gemessen nach der 4-Punkt-Methode bei einer Belastungsgeschwindigkeit von mindestens $3 N \times mm^{-2} \times sec^{-1}$, einem überwiegend transkristallinen Bruchmodus und vorzugsweise mit einem n-Exponenten der unterkritischen Rißausbreitung von mindestens 70 bei 1 450 °C.

2. Verfahren nach Anspruch 1, dadurch gekennzeichnet, daß ein ausschließlich in der alpha-Modifikation vorliegendes Siliciumcarbidpulver verwendet wird.

3. Verfahren nach Anspruch 1 und 2, dadurch gekennzeichnet, daß ein Siliciumcarbidpulver mit einer spezifischen Oberfläche von 4 bis 14 m²/g verwendet wird.

4. Verfahren nach Anspruch 1, dadurch gekennzeichnet, daß der Aluminium enthaltende Zusatz in Pulverform mit einer Teilchengrößenverteilung von 10 μm und feiner eingesetzt wird.

5. Verfahren nach Anspruch 4, dadurch gekennzeichnet, daß der Aluminium enthaltende Zusatz als Aluminiummetall oder als Aluminiumverbindung eingesetzt wird.

6. Verfahren nach Anspruch 5, dadurch gekennzeichnet, daß als Aluminiumverbindung Aluminiumnitrid und/oder Aluminiumphosphid verwendet wird.

7. Verfahren nach Anspruch 1, dadurch gekennzeichnet, daß die Drucksinterung im Vakuum bei einem Gasdruck von < 50 mbar (5 000 Pa) durchgeführt wird.

8. Verfahren nach Anspruch 1, dadurch gekennzeichnet, daß die Drucksinterung in einer Schutzgasatmosphäre durchgeführt wird.

9. Formkörper aus polykristallinem alpha-Siliciumcarbid mit einer Dichte von mindestens 99 % der theoretischen Dichte des SiC, dadurch gekennzeichnet, daß sie aus

mindestens 98,8 Gew.-% alpha Siliciumcarbid
0,1 bis     0,4 Gew.-% Aluminium
bis zu     0,4 Gew.-% Stickstoff und/oder Phosphor
bis zu     0,2 Gew.-% Sauerstoff und
bis zu     0,2 Gew.-% Kohlenstoff bestehen,

wobei das alpha-Siliciumcarbid in Form eines homogenen Mikrogefüges mit Korngrößen von maximal 12 μm und die restlichen Bestandteile im wesentlichen in Form einer festen Lösung im alpha-SiC-Gitter vorliegen, mit einer Biegebruchfestigkeit von mindestens 600 N/mm² bis zu mindestens 1 450 °C, gemessen nach der 4-Punkt-Methode bei einer Belastungsgeschwindigkeit von mindestens $3\,N \times mm^{-2} \times sec^{-1}$ und einem überwiegend transkristallinen Bruchmodus, die nach dem Verfahren gemäß Anspruch 1 hergestellt worden sind.

10. Formkörper gemäß Anspruch 9 mit einem n-Exponenten der unterkristischen Rißausbreitung von mindestens 70 bei 1 450 °C.

**Ansprüche** (Für den Vertragsstaat AT)

1. Verfahren zur Herstellung von Formkörpern aus polykristallinem alpha-Siliciumcarbid mit einer Dichte von mindestens 99 % der theoretischen Dichte des Siliciumcarbids auf Grundlage von homogenem Vermischen von im wesentlichen in der alpha-Modifikation vorliegendem Siliciumcarbid in Pulverform mit einer Teilchengrößenverteilung von 3 μm und feiner, mit einem Aluminium enthaltenden Zusatz als Sinterhilfsmittel und anschließendem Heißpressen unter gleichzeitiger Formgebung in Gegenwart einer gegenüber Siliciumcarbid inerten Atmosphäre oder im Vakuum unter Anwendung eines Stempeldruckes von mindestens 100 bar (10 MPa) bei einer Temperatur von 1 850 °C bis 2 300 °C, dadurch gekennzeichnet, daß das Siliciumcarbidpulver mit dem Aluminium enthaltenden Zusatz in einer 0,1 bis 0,4 Gew.-% freiem Aluminium entsprechenden Menge, bezogen auf das Gesamtgewicht der Feststoffanteile, vermischt und heißgepreßt wird unter Bildung der Formkörper bestehend aus

mindestens 98,8 Gew.-% alpha-Siliciumcarbid,
0,1 bis 0,4 Gew.-% Aluminium,
0,4 Gew.-% Stickstoff und/oder Phosphor
bis zu 0,2 Gew.-% Sauerstoff und
bis zu 0,2 Gew.-% Kohlenstoff,

wobei das alpha-Siliciumcarbid in Form eines homogenen Mikrogefüges mit Korngrößen von maximal 12 μm und die restlichen Bestandteile im wesentlichen in Form einer festen Lösung im alpha-SiC-Gitter vorliegen, mit einer Biegebruchfestigkeit von mindestens 600 N/mm² bis zu mindestens 1 450 °C, gemessen nach der 4-Punkt-Methode bei einer Belastungsgeschwindigkeit von mindestens $3\,N \times mm^{-2} \times sec^{-1}$, einem überwiegend transkristallinen Bruchmodus und vorzugsweise mit einem n-Exponenten der unterkristischen Rißausbreitung von mindestens 70 bei 1 450 °C.

2. Verfahren nach Anspruch 1, dadurch gekennzeichnet, daß ein ausschließlich in der alpha-Modifikation vorliegendes Siliciumcarbidpulver verwendet wird.

3. Verfahren nach Anspruch 1 und 2, dadurch gekennzeichnet, daß ein Siliciumcarbidpuver mit einer spezifischen Oberfläche von 4 bis 14 m²/g verwendet wird.

4. Verfahren nach Anspruch 1, dadurch gekennzeichnet, daß der Aluminium enthaltende Zusatz in Pulverform mit einer Teilchengrößenverteilung von 10 μm und feiner eingesetzt wird.

5. Verfahren nach Anspruch 4, dadurch gekennzeichnet, daß der Aluminium enthaltende Zusatz als Aluminiummetall oder als Aluminiumverbindung eingesetzt wird.

6. Verfahren nach Anspruch 5, dadurch gekennzeichnet, daß als Aluminiumverbindung Aluminiumnitrid und/oder Aluminiumphosphid verwendet wird.

7. Verfahren nach Anspruch 1, dadurch gekennzeichnet, daß die Drucksinterung im Vakuum bei einem Gasdruck von < 50 mbar (5 000 Pa) durchgeführt wird.

8. Verfahren nach Anspruch 1, dadurch gekennzeichnet, daß die Drucksinterung in einer Schutzgasatmosphäre durchgeführt wird.

**Claims** (for the Contracting States : BE, CH, DE, FR, GB, IT, LI, NL, SE)

1. Process for the production of shaped articles of polycrystalline α-silicon carbide having a density of at least 99 % of the theoretical density of SiC, wherein a pulverulent silicon carbide substantially in the form of the α-modification and having a particle size distribution of 3 μm and finer is homogeneously mixed with an aluminium-containing additive as a sintering aid, and subsequently hot-pressed while simultaneously shaped in the presence of an atmosphere that is inert towards silicon carbide or *in vacuo* with the application of a die pressure of at least 100 bar (10 MPa) at a temperature of from 1,850° to 2,300 °C, characterized in that said silicon carbide is mixed with said aluminium-containing additive in an amount corresponding to from 0.1 to 0.4 % by weight of free aluminium, based on the total weight of the solid constituents, and is then hot-pressed resulting in shaped articles consisting of

at least 98.8 % by weight of α-silicon carbide
0.1 to 0.4 % by weight of aluminium
0.4 % by weight of nitrogen and/or phosphorus
up to 0.2 % by weight of oxygen
up to 0.2 % by weight of carbon,

9

the α-silicon carbide being in the form of a homogeneous microstructure having grain sizes of not more than 12 μm and the other constituents being substantially in the form of a solid solution in the α-SiC lattice, and having a flexural strength of at least 600 N/mm² up to at least 1,450 °C, measured according to the four-point method at a stress rate of at least $3 N \cdot mm^{-2} \cdot sec^{-1}$, a predominantly transgranular fracture mechanism and an n-exponent of the subcritical crack propagation of a least 70 at 1,450 °C.

2. Process according to claim 1, characterized in that a silicon carbide powder that is exclusively in the form of the α-modification is used.

3. Process according to claims 1 and 2, characterized in that a silicon carbide powder having a specific surface area of from 4 to 14 m²/g is used.

4. Process according to claim 1, characterized in that the aluminium-containing additive is used in the form of a powder having a particle size distribution of 10 μm and finer.

5. Process according to claim 4, characterized in that aluminium metal or an aluminium compound is used as the aluminium-containing additive.

6. Process according to claim 5, characterized in that aluminium nitride and/or aluminium phosphide is used as the aluminium compound.

7. Process according to claim 1, characterized in that the pressure-sintering is carried out *in vacuo* at a gas pressure of less than 50 mbar (5,000 Pa).

8. Process according to claim 1, characterized in that the pressure-sintering is carried out in a protective gas atmosphere.

9. Shaped articles of polycristalline silicon carbide having a density of at least 99 % of the theoretical density of SiC, consisting of

at least 98.8 % by weight of α-silicon carbide,
0.1 to    0.4 % by weight of aluminium,
up to    0.4 % by weight of nitrogen and/or phosphorus,
up to    0.2 % by weight of oxygen,
up to    0.2 % by weight of carbon,

the α-silicon carbide being in the form of a homogeneous microstructure having grain sizes of not more than 12 μm and the other constituents being substantially in the form of a solid solution in the α-SiC lattice, and having a flexural strength of at least 600 N/mm² up to at least 1,450 °C, measured according to the four-point method at a stress rate of at least $3 N \cdot mm^{-2} \cdot sec^{-1}$, and a predominantly transgranular fracture mechanism, said shaped articles having been produced according to the process of claim 1.

10. Shaped articles according to claim 9 having an n-exponent of the subcritical crack propagation of at least 70 at 1,450 °C.


**Claims** (for the Contracting State AT)

1. Process for the production of shaped articles of polycrystalline α-silicon carbide having a density of at least 99 % of the theoretical density of SiC, wherein a pulverulent silicon carbide substantially in the form the α-modification and having a particle size distribution of 3 μm and finer is homogeneously mixed with an aluminium-containing additive as a sintering aid, and subsequently hot-pressed while simultaneously shaped in the presence of an atmosphere that is inert towards silicon carbide or *in vacuo* with the application of a die pressure of at least 100 bar (10 MPa) at a temperature of from 1,850° to 2,300 °C, characterized in that said silicon carbide is mixed with said aluminium-containing additive in an amount corresponding to from 0.1 to 0.4 % by weight of free aluminium, based on the total weight of the solid constituents, and is then hot-pressed resulting in shaped articles consisting of

at least 98.8 % by weight of α-silicon carbide
0.1 to    0.4 % by weight of aluminium
         0.4 % by weight of nitrogen and/or phosphorus
up to    0.2 % by weight of oxygen
up to    0.2 % by weight of carbon,

the α-silicon carbide being in the form of a homogeneous microstructure having grain sizes of not more than 12 μm and the other constituents being substantially in the form of a solid solution in the α-SiC lattice, and having a flexural strength of at least 600 N/mm² up to at least 1,450 °C, measured according to the four-point method at a stress rate of at least $3 N \cdot mm^{-2} \cdot sec^{-1}$, a predominantly transgranular fracture mechanism and an n-exponent of the subcritical crack propagation of at least 70 at 1,450 °C.

2. Process according to claim 1, characterized in that a silicon carbide powder that is exclusively in the form of the α-modification is used.

3. Process according to claims 1 and 2, characterized in that a silicon carbide powder having a specific surface area of from 4 to 14 m²/g is used.

4. Process according to claim 1, characterized in that the aluminium-containing additive is used in the form of a powder having a particle size distribution of 10 µm and finer.

5. Process according to claim 4, characterized in that aluminium metal or an aluminium compound is used as the aluminium-containing additive.

6. Process according to claim 5, characterized in that aluminium nitride and/or aluminium phosphide is used as the aluminium compound.

7. Process according to claim 1, characterized in that the pressure-sintering is carried out *in vacuo* at a gas pressure of less than 50 mbar (5,000 Pa).

8. Process according to claim 1, characterized in that the pressure-sintering is carried out in a protective gas atmosphere.

**Revendications** (pour les Etats contractants : BE, CH, DE, FR, GB, IT, LI, NL, SE)

1. Procédé pour produire des pièces moulées en du carbure de silicium alpha polycristallin, présentant une masse volumique représentant au moins 99 % de la masse volumique théorique du carbure de silicium, à base d'un mélange homogène de carbure de silicium, présent essentiellement sous la forme alpha, sous forme de poudre présentant une répartition de grosseur de grains égale ou inférieure à 3 microns, et un additif contenant de l'aluminium comme adjuvant de frittage, puis compression à chaud avec, en même temps, moulage en présence d'une atmosphère inerte à l'égard du carbure de silicium, ou sous vide en utilisant une pression d'au moins 100 bars (10 MPa) à une température de 1 850 °C jusqu'à 2 300 °C, procédé caractérisé en ce qu'on mélange la poudre de carbure de silicium avec l'additif contenant de l'aluminium, en une quantité correspondant à 0,1 à 0,4 % en poids d'aluminium libre, par rapport au poids total des solides, et en ce qu'on comprime à chaud en formant des pièces moulées consistant en :

au moins 98,8 % en poids de carbure de silicium-alpha,
0,1 à      0,4 % en poids d'aluminium,
            0,4 % en poids d'azote et/ou de phosphore
jusqu'à    0,2 % en poids d'oxygène et
jusqu'à    0,2 % en poids de carbone,

le carbure de silicium-alpha étant présent sous forme d'une micro-structure homogène ayant des grosseurs de grains de 12 microns au maximum et les autres constituants étant présents essentiellement sous forme d'une solution solide dans le réseau de SiC-alpha, les pièces ayant une résistance à la rupture par flexion d'au moins 600 N/mm² jusqu'à 1 450 °C au moins (résistance mesurée d'après la méthode des 4 points pour une vitesse de charge d'au moins $3\,N \times mm^{-2} \times Sec^{-1}$), un mode de rupture surtout transcristalline et avantageusement un exposant n de la propagation subcritique des fissures au moins égal à 70 à 1 450 °C.

2. Procédé selon la revendication 1, caractérisé en ce qu'on utilise une poudre de carbure de silicium se présentant exclusivement sous forme alpha.

3. Procédé selon l'une des revendications 1 et 2, caractérisé en ce qu'on utilise une poudre de carbure de silicium ayant une surface spécifique de contact de 4 à 14 m²/g.

4. Procédé selon revendication 1, caractérisé en ce qu'on utilise l'additif contenant de l'aluminium sous forme d'une poudre ayant une répartition de grosseur des particules de 10 microns ou moins.

5. Procédé selon revendication 4, caractérisé en ce qu'on utilise l'additif contenant de l'aluminium sous forme d'aluminium métallique ou d'un composé de l'aluminium.

6. Procédé selon la revendication 5, caractérisé en ce qu'on utilise, comme composé d'aluminium, du nitrure d'aluminium et/ou du phosphure d'aluminium.

7. Procédé selon la revendication 1, caractérisé en ce qu'on effectue le frittage avec une compression sous vide avec une pression de gaz inférieure à 50 mbars (5 000 Pa).

8. Procédé selon la revendication 1, caractérisé en ce que l'on effectue en atmosphère de gaz protecteur le frittage avec compression.

9. Pièces moulées en du carbure de silicium alpha polycristallin ayant une densité représentant au moins 99 % de la densité théorique du SiC, caractérisées en ce qu'elles consistent en :

au moins 98,8 % en poids de carbure de silicium alpha
0,1 à      0,4 % en poids d'aluminium
jusqu'à    0,4 % en poids d'azote et/ou de phosphore
jusqu'à    0,2 % en poids d'oxygène et
jusqu'à    0,2 % en poids de carbone,

le carbure de silicium alpha étant présent sous forme d'une microstructure homogène présentant des grosseurs de grains de 12 microns au maximum et les autres constituants étant essentiellement présents sous forme d'une solution solide dans le réseau de SiC-alpha, les pièces ayant une résistance à la rupture par flexion d'au moins 600 N/mm² jusqu'à 1 450 °C au moins (résistance mesurée selon la méthode des quatre points pour une vitesse de charge d'au moins 3 N × mm⁻² × sec⁻¹) et ayant un mode de rupture surtout transcristalline, ces pièces ayant été produites par le procédé selon la revendication 1.

10. Pièces moulées selon la revendication 9, caractérisées en ce qu'elles présentent un exposant n de la propagation sub-critique des fissures d'au moins 70 à 1 450 °C.


**Revendications** (pour l'Etat contractant AT)

1. Procédé pour produire des pièces moulées en du carbure de silicium alpha polycristallin, présentant une masse volumique représentant au moins 99 % de la masse volumique théorique du carbure de silicium, à base d'un mélange homogène de carbure de silicium, présent essentiellement sous la forme alpha, sous forme de poudre présentant une répartition de grosseur de grains égale ou inférieure à 3 microns, et un additif contenant de l'aluminium comme adjuvant de frittage, puis compression à chaud avec, en même temps, moulage en présence d'une atmosphère inerte à l'égard du carbure de silicium, ou sous vide en utilisant une pression d'au moins 100 bars (10 MPa) à une température de 1 850 °C jusqu'à 2 300 °C, procédé caractérisé en ce qu'on mélange la poudre de carbure de silicium avec l'additif contenant de l'aluminium, en une quantité correspondant à 0,1 à 0,4 % en poids d'aluminium libre, par rapport au poids total des solides, et en ce qu'on comprime à chaud en formant des pièces moulées consistant en :

au moins 98,8 % en poids de carbure de silicium-alpha,
0,1 à      0,4 % en poids d'aluminium,
          0,4 % en poids d'azote et/ou de phosphore
jusqu'à    0,2 % en poids d'oxygène et
jusqu'à    0,2 % en poids de carbone,

le carbure de silicium-alpha étant présent sous forme d'une micro-structure homogène ayant des grosseurs de grains de 12 microns au maximum et les autres constituants étant présents essentiellement sous forme d'une solution solide dans le réseau de SiC-alpha, les pièces ayant une résistance à la rupture par flexion d'au moins 600 N/mm² jusqu'à 1 450 °C au moins (résistance mesurée d'après la méthode des 4 points pour une vitesse de charge d'au moins 3 N × mm⁻² × Sec⁻¹), un mode de rupture surtout transcristalline et avantageusement un exposant n de la propagation subcritique des fissures au moins égal à 70 à 1 450 °C.

2. Procédé selon la revendication 1, caractérisé en ce qu'on utilise une poudre de carbure de silicium se présentant exclusivement sous forme alpha.

3. Procédé selon l'une des revendications 1 et 2, caractérisé en ce qu'on utilise une poudre de carbure de silicium ayant une surface spécifique de contact de 4 à 14 m²/g.

4. Procédé selon revendication 1, caractérisé en ce qu'on utilise l'additif contenant de l'aluminium sous forme d'une poudre ayant une répartition de grosseur des particules de 10 microns ou moins.

5. Procédé selon revendication 4, caractérisé en ce qu'on utilise l'additif contenant de l'aluminium sous forme d'aluminium métallique ou d'un composé de l'aluminium.

6. Procédé selon la revendication 5, caractérisé en ce qu'on utilise, comme composé d'aluminium, du nitrure d'aluminium et/ou du phosphore d'aluminium.

7. Procédé selon la revendication 1, caractérisé en ce qu'on effectue le frittage avec une compression sous vide avec une pression de gaz inférieure à 50 mbars (5 000 Pa).

8. Procédé selon la revendication 1, caractérisé en ce que l'on effectue en atmosphère de gaz protecteur le frittage avec compression.